(19) Europäisches Patentamt
European Patent Office
Office européen des brevets

(11) Veröffentlichungsnummer: **0 386 507 B1**

(12) # EUROPÄISCHE PATENTSCHRIFT

(45) Veröffentlichungstag der Patentschrift: **04.05.94**

(51) Int. Cl.$^5$: **C08F 8/14**, C11D 1/00

(21) Anmeldenummer: **90103081.7**

(22) Anmeldetag: **17.02.90**

(54) **Polyacrylsäureester mit langkettigen Kohlenwasserstoff- und Polyoxyalkylengruppen und deren Verwendung als grenzflächenaktive Substanzen.**

(30) Priorität: **03.03.89 DE 3906702**

(43) Veröffentlichungstag der Anmeldung:
**12.09.90 Patentblatt 90/37**

(45) Bekanntmachung des Hinweises auf die Patenterteilung:
**04.05.94 Patentblatt 94/18**

(84) Benannte Vertragsstaaten:
**BE DE ES FR GB IT NL**

(56) Entgegenhaltungen:
**DE-A- 3 636 429**
**DE-B- 1 065 620**

**PATENT ABSTRACTS OF JAPAN, Band 10, Nr. 339 (C-385))[2395], 15. Novemeber 1986;& JP-A-61 145 254**

(73) Patentinhaber: **Th. Goldschmidt AG**
**Goldschmidtstrasse 100**
**D-45127 Essen(DE)**

(72) Erfinder: **Fock, Jürgen, Dr.**
**Mörsenbroicher Weg 114**
**D-4000 Düsseldorf 30(DE)**
Erfinder: **Esselborn, Eberhard**
**Pilotystrasse 21**
**D-4300 Essen 1(DE)**
Erfinder: **Schaefer, Dietmar, Dr.**
**Milchstrasse 40**
**D-4300 Essen 14(DE)**

**EP 0 386 507 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Polyacrylsäureester mit langkettigen Kohlenwasserstoff- und Polyoxyalkylengruppen sowie deren Verwendung als grenzflächenaktive Substanzen.

Die Erfindung betrifft insbesondere Polyacrylsäureester mit langkettigen Kohlenwasserstoff- und Polyoxyalkylengruppen mit einem reduzierten Gehalt an niedrigmolekularen Anteilen sowie einer Verteilung der Polymeren, welche der Poisson-Verteilung angenähert ist.

Die Erfindung betrifft ferner die Verwendung derartiger Polyacrylsäureester als grenzflächenaktive Substanzen, insbesondere als Emulgatoren zur Herstellung von Emulsionen aus natürlichen und synthetischen Ölen und Wasser. Sie betrifft insbesondere die Verwendung der vorgenannten Polyacrylsäureester zur Herstellung von W/O-Emulsionen von natürlichen und synthetischen Ölen.

Copolymerisate aus Polyoxyalkylen(meth)acrylaten und Alkyl(meth)acrylaten sind aus dem Stand der Technik bekannt. In der JP-OS 61/145254 sind organische und anorganische Pigmente beschrieben, deren Oberflächen mit einem Copolymerisat behandelt sind, welches aus 1 bis 99 Gew.-% Polyoxyalkylen(meth)-acrylat und 1 bis 99 Gew.-% Alkylmethacrylat besteht, wobei der Alkylrest des Alkylmethacrylates 6 bis 22 Kohlenstoffatome aufweist. Diese Copolymerisate erhöhen die Dispergierbarkeit der mit ihnen behandelten Pigmente.

Aus der DE-OS 36 36 429 sind polymere Tenside auf der Basis von Copolymerisaten aus hydrophoben und hydrophilen Monomeren bekannt, welche

(a) als hydrophobe Monomere Verbindungen der Formel

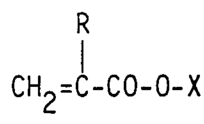

in der
R = H, $CH_3$
X = $C_4$- bis $C_{20}$-Alkyl,

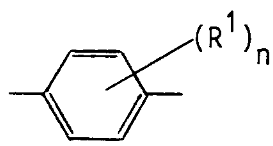

$R^1$ = H, $C_1$- bis $C_{20}$-Alkyl, Halogen,

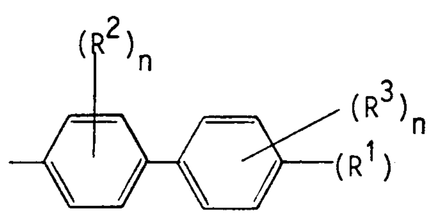

n = 1 bis 4
$R^2$, $R^3$ = H, $C_1$- bis $C_{20}$-Alkyl, F, Cl, Br
bedeutet, und

(b) als hydrophile Monomere Verbindungen der Formel

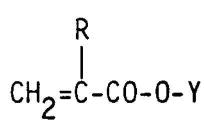

in der
R = H, $CH_3$,

$$Y = \left[\begin{matrix}CH-CH_2-O\\|\\R^4\end{matrix}\right]_m R^5$$

$R^4$ = H, $CH_3$, $C_2H_5$
$R^5$ = H, $C_1$- bis $C_4$-Alkyl und
m = 2 bis 50
bedeutet, einpolymerisiert enthalten.

Diese polymeren Tenside bilden in wäßrigen Systemen oberhalb der kritischen Micellkonzentration micellare Strukturen aus, die bei geeigneter Struktur und in bestimmten Konzentrationsbereichen als flüssigkristalline Phasen (Mesophasen) vorliegen. Die in der DE-OS 36 36 429 beschriebenen Copolymerisate sollen eine breite Variation von Mesophasenstrukturen und Stabilitätsparametern ermöglichen. Die Copolymerisate haben tensidische Eigenschaften. Die wasserlöslichen Verbindungen können in Waschmittelformulierungen zur Verstärkung der Waschkraft eingesetzt werden. Die Copolymerisate können ferner zur Erhöhung der Viskosität wäßriger Phasen dienen, wobei die viskositätserhöhende Wirkung weitgehend pH-unabhängig ist.

Die gelchromatographische Untersuchung der Copolymerisate des Standes der Technik zeigt eine relativ breite Molekulargewichtsverteilung, welche für eine verminderte tensidische Wirksamkeit verantwortlich sein kann. Wie sich weiterhin durch NMR-spektroskopische und gaschromatographische Analyse nachweisen läßt, enthalten die Copolymerisate erhebliche Anteile an niedrigmolekularen Verbindungen. Diese niedrigmolekularen Anteile bestehen aus erheblichen Gehalten an Restmonomeren sowie niedrigmolekularen Verbindungen. Es wird angenommen, daß der Grund hierfür in den stark voneinander abweichenden Polymerisationsparametern der verschiedenen Monomeren zu suchen ist.

Diese niedrigmolekularen Anteile sind jedoch in mehrfacher Weise unerwünscht. Diese niedrigmolekularen Anteile beeinträchtigen und vermindern die grenzflächenaktiven Eigenschaften der bekannten Copolymerisate, da sie selbst zu diesen Eigenschaften nichts oder nur wenig beitragen. Die niedrigmolekularen Anteile sind aber auch aus physiologischen Gründen unerwünscht, da sie zu gesundheitlichen Beeinträchtigungen, wie Hautreizungen und Sensibilisierungen führen können.

Eine Abtrennung dieser störenden Anteile aus den Copolymerisaten des Standes der Technik ist in wirtschaftlicher Weise nicht möglich.

Der Erfindung liegt die Aufgabe zugrunde, Polyacrylsäureester mit langkettigen Kohlenwasserstoff- und Polyoxyalkylengruppen bereitzustellen, welche einerseits ausgezeichnete tensidische Eigenschaften aufweisen und deren physiologische Eigenschaften andererseits wesentlich verbessert werden. Dies soll insbesondere dadurch erreicht werden, daß die vorgenannten Polyacrylsäureester eine möglichst enge Molekulargewichtsverteilung besitzen und möglichst frei von monomeren und/oder niedrigmolekularen Anteilen sind.

Diese Kombination von Eigenschaften wird erfindungsgemäß bei Polyacrylsäureestern gefunden, welche erhältlich sind durch Umesterung von durch radikalische Polymerisation erhaltenen Polyacrylsäurealkylestern, deren Alkylgruppen 1 bis 4 Kohlenstoffatome aufweisen, mit einem Gemisch von

a)Alkoholen, ausgewählt aus der Gruppe bestehend aus

- a1 gesättigten aliphatischen Alkoholen mit 4 bis 22 Kohlenstoffatomen,
- a2 ungesättigten aliphatischen Alkoholen mit 8 bis 22 Kohlenstoffatomen,
- a3 Alkylphenolen, deren Alkylgruppen jeweils 8 bis 20 Kohlenstoffatome aufweisen oder deren Oxalkierungsprodukte mit 1 bis 4 Oxyethylen- und/oder Oxypropyleneinheiten,

und

b) Polyoxyalkylenmonoolen der allgemeinen, durchschnittlichen Formel

$R^1O-(C_nH_{2n}O-)_xH$

wobei

- $R^1$ der Kohlenwasserstoffrest eines Startalkohols $R^1OH$ ist,
- n 2, 3 oder 4 ist und in der durchschnittlichen Polyoxyalkylengruppe einen mittleren Wert von 2 bis 3 hat,
- x in der durchschnittlichen Polyoxyalkylengruppe einen mittleren Wert von 4 bis 50 hat,

wobei das molare Verhältnis von a : b gleich 1 : 11 bis 28 : 1 beträgt,
in solchen Mengen, daß bis zu 70 % der Estergruppen umgesetzt werden, in Gegenwart eines an sich bekannten Umesterungskatalysators bei Temperaturen von 70 bis 160 °C, gegebenenfalls in Gegenwart eines Lösungsmittels.

Ein wesentliches Kennzeichen der Erfindung besteht somit darin, daß die erfindungsgemäßen Polyacrylsäureester durch Umesterung mit einem Alkoholgemisch erhältlich sind. Es wird dadurch möglich, von Polyacrylsäurealkylestern mit enger Molekulargewichtsverteilung auszugehen, wobei diese enge Molekulargewichtsverteilung des Ausgangsproduktes bei der Umesterung erhalten bleibt.

Als Polyacrylsäurealkylester, die der Umesterung zugeführt werden, werden solche verwendet, deren Alkylgruppen 1 bis 4 Kohlenstoffatome aufweisen. Besonders bevorzugt ist als Alkylgruppe die Methylgruppe. Die Auswahl der Alkylreste geschieht in erster Linie im Hinblick auf den Siedepunkt der entsprechenden Alkohole. Die Alkylgruppe mit 1 Kohlenstoffatom ist deshalb bevorzugt, weil Methanol im Verlauf der Umesterung am einfachsten aus dem Reaktionsgemisch zu entfernen ist. Mit steigender Kohlenstoffanzahl bereitet die Entfernung der Alkohole größere Schwierigkeiten, so daß sich hieraus eine Limitierung auf etwa 4 Kohlenstoffatome im Alkylrest ergibt. Es ist natürlich denkbar, unter Umständen auch Alkylgruppen mit mehr als 4 Kohlenstoffatome einzusetzen, jedoch würde dies nur eine verschlechterte Ausführungsform der Erfindung bedeuten.

Für die Umesterung wird ein Gemisch von Alkoholen a) und b) eingesetzt.

Zu der Gruppe a) gehören a1 gesättigte aliphatische Alkohole mit 4 bis 22 Kohlenstoffatomen. Es handelt sich hier somit im Regelfall um Fettalkohole, die z.B. durch Reduktion aus natürlich vorkommenden Rohstoffen hergestellt sind. Besonders bevorzugt werden als Komponente a1 gesättigte Fettalkohole mit 12 bis 18 Kohlenstoffatomen, insbesondere Stearyl- und Talgfettalkohol, eingesetzt. Dem Fachmann ist ersichtlich, daß auch Gemische, insbesondere natürliche Gemische solcher Fettalkohole, verwendbar sind.

Als Alkohol der Gruppe a) können gemäß a2 auch ungesättigte aliphatische Alkohole mit 8 bis 22 Kohlenstoffatomen für die Umesterung eingesetzt werden, wobei der Oleylalkohol besonders bevorzugt ist. Polyacrylsäureester mit Oleyl- und Polyoxyalkylengruppen sind durch Copolymerisation nur unter Inkaufnahme erheblicher Nachteile herstellbar, da die Doppelbindung der Oleylgruppe bei der Polymerisationsreaktion erheblich stört. Bei dem Verfahren der Umesterung bestehen diese Schwierigkeiten nicht. Polyacrylsäureester, welche mit Oleylalkoholen und Polyoxyalkylenmonoolen umgeestert sind, weisen aber besonders gute anwendungstechnische Eigenschaften, wie z.B. hervorragende Emulgierfähigkeit und niedrige Stockpunkte, auf. Die Verwendung ungesättigter aliphatischer Alkohole als Komponente a) stellt deshalb eine besonders bevorzugte Ausführungsform der Erfindung dar.

Eine weitere mögliche Komponente a) besteht in a3 Alkylphenolen, deren Alkylgruppen jeweils 8 bis 12 Kohlenstoffatome aufweisen. Dabei kann man mit besonderem Vorteil Alkylphenole für die Umesterung verwenden, an welche man 1 bis 3 Mol Ethylen- und/oder Propylenoxid angelagert hat. Hierdurch wird die Hydrolysestabilität der erfindungsgemäßen Polyacrylsäureester erhöht.

Alkohole der vorgenannten Gruppen a1, a2 und a3 können einzeln oder im Gemisch miteinander verwendet werden.

Die Umesterungskomponente b) wird durch Polyoxyalkylenmonoole der allgemeinen durchschnittlichen Formel

$$R^1O\text{-}(C_nH_{2n}O\text{-})_xH$$

gebildet.

$R^1$ ist dabei der Kohlenwasserstoffrest eines Startalkohols $R^1OH$. Dieser Startalkohol $R^1OH$ ist vorzugsweise ein aliphatischer gesättigter oder ungesättigter Alkohol. Der Rest $R^1$ ist somit bevorzugt zum Beispiel ein Methyl-, Ethyl-, Propyl-, Octyl-, Isooctyl- oder Allylrest. Der Rest $R^1$ kann jedoch auch ein Arylalkylrest, z.B. ein Benzylrest, sein. Die Art der Gruppe $R^1$ hat verhältnismäßig wenig Einfluß auf die Eigenschaften der Polyacrylsäureester, so daß man bezüglich der Auswahl der Substituenten $R^1$ verhältnismäßig wenig eingeengt ist.

Der Index n kann einen Wert von 2, 3 oder 4 haben, so daß es sich bei der Einheit in der Klammer um eine Oxyethylen-, Oxypropylen-, Oxybutylen- oder Oxytetramethyleneinheit handelt. Da die Polyoxyalkylenmonoole in Form eines polymeren Gemisches vorliegen, kann der durchschnittliche Wert von n auch eine gebrochene Zahl sein. Vorzugsweise beträgt der mittlere Wert von n 2 bis 3, insbesondere 2,1 bis 2,3. Die Oxyalkyleneinheiten können dabei blockweise oder statistisch angeordnet sein.

Der Index x gibt die Anzahl der Oxyalkyleneinheiten an. Er hat einen mittleren Wert von 4 bis 50, insbesondere 6 bis 20.

Für die Umesterung wird ein Gemisch der Alkohole a) und b) eingesetzt, wobei das molare Verhältnis von a) : b) = 1 : 11 bis 28 : 1, insbesondere 1 : 10 bis 10 : 1, besonders bevorzugt 5 : 1 bis 9 : 1 ist.

Dieses aus a) und b) bestehende Gemisch wird in solchen Mengen für die Umesterung der Polyacrylsäurealkylester verwendet, daß bis zu 70 % der Estergruppen umgesetzt werden. Zur Einstellung der gewünschten tensidischen Eigenschaften sollte ein Umesterungsgrad von 30 % nicht unterschritten werden.

Die Umesterung wird in Gegenwart eines an sich bekannten Umesterungskatalysators, wie z.B. i-Propyl- oder n-Butyltitanat, Kalium- oder Natriummethylat, p-Toluolsulfonsäure, Methansulfonsäure, Trifluoressigsäure, durchgeführt. Die Umesterung wird in einem Temperaturbereich von 70 bis 160 °C durchgeführt, wobei ein Temperaturbereich von 110 bis 150 °C bevorzugt ist.

Die Umesterung kann gegebenenfalls in Gegenwart eines Lösungsmittels, wie z.B. Toluol, Xylol, durchgeführt werden.

Der hydrophile bzw. hydrophobe Charakter der erfindungsgemäßen Polyacrylsäureester kann durch folgende Maßnahme einzeln oder in Kombination in gewünschter Weise beeinflußt und eingestellt werden:

Der hydrophobe Charakter der Polyacrylsäureester steigt mit der Kohlenstoffanzahl der Alkohole a) sowie mit steigendem Anteil der Alkohole a) gegenüber den Polyoxyalkylenmonoolen b). Die Hydrophobie der Polyacrylsäureester ist um so höher, je niedriger der Index x und je höher der Zahlenwert des Index n ist. Die Hydrophobie kann ferner dadurch erhöht werden, daß als Rest $R^1$ ein langkettiger Kohlenwasserstoffrest gewählt wird.

In umgekehrter Weise wird die Hydrophilie der erfindungsgemäßen Polyacrylsäureester insbesondere durch einen hohen Gehalt an Polyoxyalkylenmonoolen im Umesterungsgemisch aus a) und b) gefördert, wobei niedrige Werte von n und hohe Werte von x die Hydrophilie erhöhen.

Man hat es somit in der Hand, durch geeignete Auswahl und durch geeignete Mengenverhältnisse der Alkohole a) und b) das hydrophile/hydrophobe Gleichgewicht (HLB-Wert) einzustellen und die erfindungsgemäßen Umesterungsprodukte den anwendungstechnischen Erfordernissen anzupassen. Diese Variationsbreite ist mit den Copolymerisaten des Standes der Technik nicht zu erzielen.

Es ist dem Fachmann klar, daß die als Ausgangsverbindungen für die Umesterungsreaktion dienenden Polyacrylsäurealkylester auch andere Comonomere einpolymerisiert enthalten können, wie Styrol, Acrylamid, Acrylnitril oder Methacrylsäurealkylester.

In einer besonderen Ausgestaltung der Erfindung werden solche erfindungsgemäßen Polyacrylsäureester beansprucht, welche durch Umesterung von Polyacrylsäurealkylestern erhältlich sind, bei denen bis zu 50 Mol-% der Acrylsäurealkylester durch die entsprechenden Methacrylsäurealkylester ersetzt sind.

Die erfindungsgemäßen Polyacrylsäureester weisen die geforderte hohe tensidische Aktivität auf. Sie sind hervorragende Emulgatoren. Dies wird in den Beispielen anhand der Emulgierung von Wasser in Dieselöl gezeigt, wobei es gelingt, mit geringen Mengen an erfindungsgemäßen Tensiden sehr stabile Emulsionen zu erhalten, die beispielsweise mit Vorteil als Brennstoffe in mit Dieselöl betriebenen Gasturbinen verfeuert werden können.

Die Erfindung betrifft somit auch die Verwendung der erfindungsgemäßen Polyacrylsäureester als hochwirksame Tenside, insbesondere hochwirksame Emulgatoren. Sie betrifft insbesondere die Verwendung der erfindungsgemäßen Polyacrylsäureester geeigneten HLB-Bereiches als W/O-Emulgatoren für natürliche oder synthetische Öle. Es ist dabei ein besonderer Vorteil, daß die erfindungsgemäßen Polyacrylsäureester nicht nur hohe Wirksamkeit, sondern auch gute physiologische Eigenschaften aufweisen.

Die Herstellung der erfindungsgemäßen Polyacrylsäureester und deren anwendungstechnische Eigenschaften werden in den nachfolgenden Beispielen noch näher erläutert.

## Beispiel 1

Herstellung von Polymethylacrylat durch radikalische Polymerisation (nicht erfindungsgemäß)

Eine Lösung von 0,6 g Azodiisobuttersäurenitril und 20,2 g Dodecylmercaptan in 50 g Toluol und 280 g (ca. 3,25 Mol) Methylacrylat wird innerhalb von 2 h in einen mit 53 g Toluol gefüllten Reaktor gegeben; das vorgelegte Lösungsmittel hat dabei eine Temperatur von 100 °C und befindet sich unter einer Stickstoffatmosphäre. Danach werden nochmal 0,9 g Azodiisobuttersäurenitril, gelöst in 20 g Methylethylketon, innerhalb von 0,5 h nachgegeben. Schließlich wird das Reaktionsgemisch noch für 1 h bei der gleichbleibenden Temperatur von 100 °C weiter erwärmt. Nach Beendigung der Reaktion wird das Lösungsmittel abdestilliert. Es verbleibt eine farblose, viskose Flüssigkeit mit einem Brechungsindex von 1,4802. Aus der gelchromatographischen Untersuchung ergibt sich für das erhaltene Polymerisat ein numerisches Molekulargewicht $\overline{M}_n$ von 1950 und für das Gewichtsmittel des Molekulargewichtes $\overline{M}_w$ 3330; der Uneinheitlichkeitskoeffizient beträgt demnach 1,71. Der Restmonomerengehalt beträgt < 0,1 %.

Beispiele 2 und 3

Herstellung von Polymethylacrylaten höheren Molekulargewichtes durch radikalische Polymerisation (nicht erfindungsgemäß)

Es wird verfahren wie in Beispiel 1 mit der Ausnahme, daß der Gehalt an Dodecylmercaptan gesenkt wird. In Tabelle 1 wird die Abhängigkeit der Zahlen- und Gewichtsmittel des Molekulargewichtes vom Gehalt an Dodecylmercaptan gezeigt. Der gefundene Restmonomerengehalt beträgt in beiden Fällen < 0,1 %

Tabelle 1

| Polymethylacrylat aus Beispiel | Dodecylmercaptan [Gew.-%] | Molekulargewicht $\overline{M}_n$ | Molekulargewicht $\overline{M}_w$ | Uneinheitlichkeitskoeffizient |
|---|---|---|---|---|
| 2 | 2,95 | 4 453 | 11 346 | 2,55 |
| 3 | 0,43 | 16 750 | 68 500 | 4,09 |

Beispiel 4

Herstellung von Poly-n-butylacrylat durch radikalische Polymerisation (nicht erfindungsgemäß)

Es wird verfahren wie in Beispiel 1 mit dem Unterschied, daß anstelle von Methylacrylat n-Butylacrylat eingesetzt wird.

Aus der gaschromatographischen Untersuchung ergibt sich für das erhaltene Polymerisat ein numerisches Molekulargewicht $\overline{M}_n$ von 1900 und für das Gewichtsmittel des Molekulargewichtes $\overline{M}_w$ 3300; der Uneinheitlichkeitskoeffizient beträgt demnach 1,73. Der Restmonomerengehalt wird zu < 0,1 % ermittelt.

Beispiel 5

Umesterung von Polymethylacrylat mit Oleylalkohol und Polyethylenoxidpropylenoxidmonool

369,2 g des Polymethacrylates aus Beispiel 1, gelöst in 982,8 g Toluol, werden zusammen mit 463,8 g (ca. 1,75 Mol) Oleylalkohol und 149,8 g (ca. 0,25 Mol) eines mit Methanol gestarteten Polyalkylenoxidmonools aus 85 Gew.-% Ethylenoxid und 15 Gew.-% Propylenoxid (Hydroxylzahl 93,5; Molekulargewicht ca. 600) unter Stickstoff erhitzt. Zunächst werden möglicherweise vorhandene Spuren von Wasser durch azeotrope Destillation entfernt. Danach erfolgt die Zugabe von 1,65 g Isopropyltitanat. Das bei der Umesterung entstehende Methanol wird durch Fraktionierung vom Toluol getrennt. Nach 2 und 4 h Reaktionsdauer werden jeweils 1,65 g Isopropyltitanat nachdosiert. Die Reaktion ist nach etwa 6 h beendet; ihr Ende wird durch eine Kopftemperatur von etwa 110 °C angezeigt.

Der durch gaschromatographische Untersuchung ermittelte Anteil an Oleylalkohol beträgt weniger als 0,4 %, entsprechend einem Umsatz von 99,2 %, bezogen auf eingesetzte Menge Fettalkohol. Die gelchromatographische Analyse zeigt einen unumgesetzten Anteil an Polyalkylenoxidmonool von etwa 1 bis 2 % an, was einem Umsatz im Bereich von 90 bis 95 % der Theorie entspricht. Der Methanolgehalt im Destillat beträgt 60,1 g oder 22,3 Gew.-%, entsprechend einem Umsatz von 93,9 % der Theorie. Das Produkt hat einen Stockpunkt nach DIN (ISO) 3016 von etwa -15 °C und eine Farbzahl nach Gardner nach Entfernung des Umesterungskatalysators von 0 bis 1.

Beispiele 6 bis 24

Umesterung von Polymethylacrylaten unterschiedlichen Molekulargewichtes mit verschiedenen Fettalkoholen und Polyalkylenoxidmonoolen

Es wird verfahren wie in Beispiel 1 mit der Ausnahme, daß Polymethylacrylate unterschiedlichen Molekulargewichtes, verschiedene Fettalkohole und Polyalkylenoxidmonoole in, hinsichtlich der Methylestergruppen, wechselnden Mol- bzw. Gewichtsverhältnissen verwendet werden. In Tabelle 2 werden Molekulargewicht und Menge des Fettalkohols, Art und Menge des Polyalkylenoxidmonools, der theoretische

Substitutionsgrad, der sich aus dem Quotienten der Zahl der substituierten Estergruppen ergibt, und die nach DIN (ISO) 3016 ermittelten Stockpunkte (pour points), die Reaktionsausbeuten aus der freigesetzten Menge an Methanol (MeOH) bzw. aus der Menge an unumgesetztem Fettalkohol das theoretische und das durch gelchromatographische Analyse ermittelte numerische Molekulargewicht und der Uneinheitlichkeitskoeffizient angegeben.

Tabelle 2

| Beispiel | Polymethylacrylat | | Fettalkohol | | Polyalkylenoxid-monool | | Substitutionsgrad | Stockpunkt | Ausbeute [ % ] | | $\bar{M}_n$ [ g/Mol ] | | $\bar{M}_w/\bar{M}_n$ |
|---|---|---|---|---|---|---|---|---|---|---|---|---|---|
| Nr. | $\bar{M}_n$ | Menge [g] | Art | Menge [g] | Art | Menge [g] | [ Mol-% ] | [ °C ] | MeOH | FA | theor. | prakt. | |
| 6 | 1950 | 92,3 | OLA | 124,1 | 0615 | 22,1 | 0,50 | | 96,0 | 97,6 | 7200 | 5500 | 2,0 |
| 7 | 1950 | 92,3 | OLA | 49,9 | 0615 | 188,1 | 0,50 | | 96,8 | 98,2 | 10200 | 5900 | 1,6 |
| 8 | 1950 | 92,3 | OLA | 13,7 | 0615 | 269,0 | 0,50 | | 95,7 | 98,9 | 11600 | 6100 | 1,6 |
| 9 | 1950 | 92,3 | OLA | 133,2 | 0615 | 43,9 | 0,57 | -22 | 98,0 | 99,3 | 8200 | 5300 | 1,9 |
| 10 | 1950 | 92,3 | OLA | 156,5 | 0615 | 51,6 | 0,67 | -19 | 96,0 | 98,5 | 9100 | 6200 | 2,0 |
| 11 | 4453 | 88,7 | OLA | 116,8 | 0615 | 38,0 | 0,50 | | 97,3 | 99,3 | 18000 | 11500 | 3,4 |
| 12 | 16750 | 86,5 | OLA | 117,1 | 0615 | 37,7 | 0,50 | | 96,8 | 98,7 | 78000 | 29600 | 4,2 |
| 13 | 1950 | 92,3 | OLA | 102,1 | 0300 | 35,7 | 0,50 | -18 | 96,4 | 99,2 | 6900 | 5200 | 2,1 |
| 14 | 1950 | 92,3 | OLA | 116,8 | 0600 | 38,7 | 0,50 | -15 | 98,7 | 98,5 | 7500 | 5900 | 2,2 |
| 15 | 1950 | 92,3 | OLA | 108.3 | 1050 | 99,4 | 0,50 | | 95,4 | 97,9 | 9200 | 5800 | 1,9 |
| 16 | 1950 | 92,3 | OLA | 122,7 | 1840 | 76,5 | 0,50 | | 96,2 | 98,4 | 9000 | 6100 | 2,1 |
| 17 | 1950 | 92,3 | OLA | 128,9 | 2200 | 41,1 | 0,50 | | 95,3 | 98,8 | 8000 | 4800 | 1,7 |
| 18 | 1950 | 92,3 | OLA | 23,6 | 2200 | 865,7 | 0,50 | | 96,7 | 99,3 | 31400 | 5200 | 2,0 |

Fortsetzung Tabelle 2

| Beispiel | Polymethylacrylat | | Fettalkohol | | Polyalkylenoxid-monool | | Substitutionsgrad | Stockpunkt | Ausbeute [ % ] | | $\bar{M}_n$ [ g/Mol ] | | $\bar{M}_w/\bar{M}_n$ |
|---|---|---|---|---|---|---|---|---|---|---|---|---|---|
| Nr. | $\bar{M}_n$ | Menge [g] | Art | Menge [g] | Art | Menge [g] | [ Mol-% ] | [ °C ] | MeOH | FA | theor. | prakt. | |
| 19 | 1950 | 92,3 | OCA | 59,0 | 0615 | 27,3 | 0,50 | | 97,9 | 99,4 | 5300 | 2800 | 1,9 |
| 20 | 1950 | 92,3 | C21A | 157,5 | 0615 | 47,2 | 0,50 | 2 | 94,3 | 96,1 | | | |
| 21 | 1950 | 92,3 | BHA | 135,6 | 0615 | 42,8 | 0,50 | > 50 | 93,8 | 95,8 | 8300 | 6100 | 1,9 |
| 22 | 1950 | 92,3 | STA | 119,3 | 0615 | 34,6 | 0,50 | 41 | 96,9 | 97,7 | 7500 | 5000 | 1,6 |
| 23 | 1950 | 92,3 | STA | 116,1 | 0615 | 42,2 | 0,50 | 38 | 94,1 | 98,3 | 7600 | 5200 | 1,6 |
| 24 | 1950 | 92,3 | TFA | 113,4 | 0615 | 38,3 | 0,50 | | 95,3 | 97,8 | 7400 | 5500 | 2,0 |

Legende

Fettalkohole:

| | |
|---|---|
| OCA | Octanol |
| OLA | Oleylalkohol |
| TFA | Talgfettalkohol |
| STA | Stearylalkohol |
| C21A | Exxal-21 R der Fa. Esso |
| BHA | Behenylalkohol |

Methanol-gestartete Polyether:

| | |
|---|---|
| 0300 | Polyethylenoxidmonool; M (OHZ) = 300 |
| 0600 | Polyethylenoxidmonool; M (OHZ) = 600 |
| 0615 | Polyethylenoxid-propylenoxidmonool; M (OHZ) = 600 (85 Gew.-% EO; 15 Gew.-% PO); statistisch |
| 1050 | Polyethylenoxid-propylenoxidmonool; M (OHZ) = 1040 (50 Gew.-% EO; 50 Gew.-% PO); statistisch |
| 1840 | Polyethylenoxid-butylenoxidmonool; M (OHZ) = 1820 (60 Gew.-% EO; 40 Gew.-% BO); statistisch |
| 2200 | Polyethylenoxidmonool; M (OHZ) = 2170 |

Beispiel 25

Umesterung von Poly-n-butylacrylat mit Oleylalkohol und Polyethylenoxid-propylenoxidmonool

Es wird verfahren wie in Beispiel 5 mit dem Unterschied, daß 580 g Poly-n-butylacrylat aus Beispiel 4 eingesetzt werden und Toluol durch Xylol ersetzt wird. Die Reaktion ist nach etwa 10 h beendet; ihr Ende wird durch eine Kopftemperatur von etwa 140 °C angezeigt.

Der durch gaschromatographische Untersuchung ermittelte Anteil an Oleylalkohol beträgt etwa 0,5 %, entsprechend einem Umsatz von 99,0 %, bezogen auf eingesetzte Menge Fettalkohol. Die gelchromatographische Analyse zeigt einen unumgesetzten Anteil an Polyalkylenoxidmonool von etwa 1 bis 2 % an, was einem Umsatz im Bereich von 90 bis 95 % der Theorie entspricht. Das Produkt hat einen Stockpunkt von etwa -17 °C und eine Farbzahl nach Gardner nach Entfernung des Umesterungskatalysators von 0 bis 1.

Beispiel 26

(Vergleichsbeispiel)

A1) Herstellung von Oleylacrylat

268 g (ca. 1 Mol) Oleylalkohol, 172 g (ca. 2 Mol) Methylacrylat, 1,6 g Isopropyltitanat, 0,27 g Monomethylhydrochinon und 100 g Toluol werden in einem Reaktor mit Fraktionieraufsatz unter Einleitung getrockneter Luft auf 100 °C erhitzt. Das bei der einsetzenden Umesterungsreaktion freiwerdende Methanol wird durch Fraktionierung im azeotropen Gemisch mit Toluol entfernt. Nach Ablauf von 2 h werden nochmals 1,1 g Isopropyltitanat zugegeben. Die Reaktion ist beendet, wenn die Kopftemperatur einen konstanten Wert von 75 °C erreicht hat. Danach werden überschüssiges Methylacrylat und Toluol bei etwa

90 °C und 20 Torr wiederum unter Luftzutritt abdestilliert. Durch Zugabe von 40 g Wasser wird unter Luftzutritt für 3 h bei 80 °C erwärmt, wobei das Isopropyltitanat vollständig zersetzt wird. Schließlich werden Wasser und Isopropanol bei 90 °C und 20 Torr wiederum unter Luftzutritt abdestilliert und das verbleibende Produkt filtriert.

Es wird ein leicht gelbliches Produkt erhalten; die durch NMR-spektroskopische Analyse ermittelte Ausbeute beträgt, bezogen auf den eingesetzten Oleylalkohol, ca. 97 % der Theorie.

A2) Herstellung von Polyethylenoxid-propylenoxidmonoacrylat

300 g (ca. 0,5 Mol) eines Methanol-gestarteten Polyalkylenoxidmonools (0615) mit 85 Gew.-% Ethylenoxid und 15 Gew.-% Propylenoxid und einem aus der Hydroxylzahl ermittelten Molekulargewicht von ca. 600, 86 g (ca. 1 Mol) Methylacrylat, 1,6 g ( + 1,1 g) Isopropyltitanat, 0,3 g Monomethylhydrochinon und 210 g Toluol werden in der in Beispiel 26 A1) beschriebenen Weise zur Reaktion gebracht.

Es wird ein leicht gelbliches Produkt erhalten; die Ausbeute beträgt, bezogen auf das eingesetzte Polyalkylenoxidmonool, 98 % der Theorie.

B) Herstellung eines Oleyl- und Polyalkylenoxidgruppen enthaltenden Copolymerisates

Eine Lösung von 0,6 g Azodiisobuttersäurenitril und 7,9 g Dodecylmercaptan in 56,4 g (ca. 0,66 Mol) Methylacrylat, 182 g (ca. 0,57 Mol) Oleylacrylat aus Beispiel 26 A1) und 53,4 g (ca. 0,08 Mol) Polyethylenoxid-propylenoxidmonoacrylat aus Beispiel 26 A2) und 50 g Toluol werden innerhalb von 3 h in einen mit 50 g Toluol gefüllten Reaktor gegeben; das unter Stickstoff stehende Lösungsmittel hat dabei eine Temperatur von 100 °C. Nach Beendigung der Zugabe werden nochmals 0,9 g Azodiisobuttersäurenitril, gelöst in 20 g Methylethylketon, über eine Zeit von 2 h nachdosiert. Die Reaktion ist nach 4 h bei einer gleichbleibenden Temperatur von 100 °C beendet. Danach werden Toluol und nicht umgesetztes Methylacrylat durch Destillation bei 90 °C und 20 Torr entfernt.

Aus der gaschromatographischen Untersuchung ergibt sich ein auf das Gesamtmonomerengemisch bezogener Restmonomerengehalt an Methylacrylat von 2,5 %. Der im Produkt verbliebene Anteil an Oleylacrylat und Polyethylenoxid-propylenoxidmonoacrylat wird durch NMR-spektroskopische Analyse zu 8 bis 10 % ermittelt.

Beispiele 27 bis 32

(Vergleichsbeispiele)

Es wird verfahren wie in Beispiel 26 mit der Ausnahme, daß als Fettalkohol in zwei Fällen Stearylalkohol eingesetzt wird und die Mengen der Monomeren und des Dodecylmercaptans variieren.

In Tabelle 3 werden die Zusammensetzung des Monomerengemisches und die eingesetzten Mengen an n-Dodecylmercaptan aufgezeigt. Darüber hinaus werden die ungefähren theoretischen und gelchromatographisch ermittelten numerischen Molekulargewichte $\overline{M}_n$ sowie der über das Gewichtsmittel des Molekulargewichtes ermittelte Uneinheitlichkeitsfaktor sowie die Restmonomerengehalte angegeben. Grundsätzlich muß darauf hingewiesen werden, daß der gelchromatographische Vergleich linearer und gepfropfter Makromoleküle allenfalls mit erheblichen Einschränkungen möglich ist, weil verzweigte Makromoleküle in der Regel scheinbar kleinere Molekulargewichte im Gelchromatogramm ergeben.

Im Vergleich zeigen die Produkte aus der polymeranalogen Umesterung und der Copolymerisation folgende Unterschiede:

1. Der unumgesetzte Anteil an Makromonomeren in den Copolymerisaten ist im allgemeinen größer als der Anteil an unumgesetzten Fett- bzw. Polyethermonoolen in den durch Umesterung erhaltenen Produkten.
2. Bei der Synthese der Copolymerisate bleiben zum Teil erhebliche Mengen an Methylacrylat unumgesetzt, während dieser Anteil nach der Herstellung von Polymethylacrylat gering ist.
3. Die durch den Uneinheitlichkeitskoeffizienten $\overline{M}_w/\overline{M}_n$ gekennzeichnete molekulare Verteilung ist bei Copolymerisaten zum Teil erheblich breiter.

Tabelle 3

| Vergleichsbeispiel Nr. | Methylacrylat Menge [g] | n-Dodecylmercaptan Menge [g] | Fettalkoholacrylat Art | Fettalkoholacrylat Menge [g] | Polyalkylenoxidmonoolacrylat Menge [g] | Stockpunkt [ °C ] | $\bar{M}_n$ [ g/Mol ] theor. | $\bar{M}_n$ [ g/Mol ] prakt. | $\bar{M}_w/\bar{M}_n$ | Restmonomere % MA | Restmonomere sonst. 1) |
|---|---|---|---|---|---|---|---|---|---|---|---|
| 26 | 56,4 | 7,9 | OLAC | 182,4 | 53,4 | - 2 | 7700 | 13000 | 7,1 | 2,4 | 7,7 |
| 27 | 44,4 | 7,3 | OLAC | 192,3 | 56,1 | -12 | 8400 | 13000 | 7,3 | 2,7 | 9,9 |
| 28 | 31,3 | 6,6 | OLAC | 202,9 | 59,4 | -14 | 9300 | 12000 | 5,8 | 2,5 | 11,6 |
| 29 | 54,0 | 20,3 | OLAC | 174,9 | 51,0 | -13 | 3000 | 2600 | 2,8 | 2,4 | 8,7 |
| 30 | 55,8 | 7,9 | STAC | 183,9 | 52,4 | 40 | 7700 | 4630 | 2,4 | 0,2 | 1,2 |
| 31 | 53,5 | 20,3 | STAC | 176,1 | 53,5 | 36 | 3000 | 1800 | 2,0 | 0,2 | 1,1 |
| 32 | 56,1 | 7,9 | OLAC | 182,1 | 54,0 2) | 0 | 7700 | 11300 | 6,5 | 2,3 | 6,5 |

1) berechnet als Oleylacrylat aus H-NMR-Analyse bzw. Stearylacrylat aus GC-Analyse

2) hergestellt unter Verwendung eines Methanol-gestarteten Polyethylenoxidmonools (0600) mit einem Molekulargewicht von 600

Legende

OLAC Oleylacrylat

STAC Stearylacrylat

## Anwendungstechnische Prüfung

In der anwendungstechnischen Prüfung wird die Wirkung von erfindungsgemäßen Umesterungsprodukten und von nicht erfindungsgemäßen Copolymerisaten als Emulgator im System Wasser/Dieselöl bei 25 °C

untersucht. Dazu werden

79,9 Vol.-% Dieselöl
20 Vol.-% Wasser
0,1 Vol.-% Emulgator

eingesetzt.

Für die Herstellung einer Emulsion werden zunächst 0,6 ml Emulgator in 480 ml Dieselöl in einem kalibrierten Gefäß gelöst. Dazu werden innerhalb von 3 Minuten 120 ml Wasser unter scherkraftreichem Rühren (Ultraturrax, ca. 10 000 Upm) zugetropft und die erhaltene Emulsion für weitere 2 Minuten unter gleichen Bedingungen homogenisiert.

Zur Beurteilung der Emulsionsstabilität wird das Volumen der abgeschiedenen Ölphase nach 10, 30, 60 und 120 Minuten ermittelt. Die erhaltenen Ergebnisse werden in der Tabelle 4 wiedergegeben.

Tabelle 4

| Emulgator aus Beispiel Nr. | Dieselölabscheidung nach Minuten | | | |
|---|---|---|---|---|
| | 10 | 30 | 60 | 120 |
| erfindungsgemäß | | | | |
| 5 | 5 | 23 | 36 | 46 |
| 9 | 2 | 6 | 12 | 24 |
| 10 | 2 | 6 | 12 | 24 |
| 11 | 2 | 12 | 22 | 35 |
| 12 | 7 | 18 | 28 | 40 |
| 13 | 8 | 33 | 47 | 49 |
| 14 | 2 | 7 | 16 | 36 |
| nicht erfindungsgemäß | | | | |
| 26 | 8 | 37 | 40 | 52 |
| 27 | 6 | 12 | 22 | 32 |
| 28 | 5 | 12 | 25 | 36 |
| 30 | 30 | 49 | 54 | 57 |
| 32 | 6 | 27 | 40 | 50 |

Es wird deutlich, daß die emulgierende Wirkung von Produkten aus der Umesterung denen, die durch Copolymerisation erhalten worden sind, bei annähernd übereinstimmender chemischer Zusammensetzung im allgemeinen überlegen ist.

**Patentansprüche**
**Patentansprüche für folgende Vertragsstaaten : BE, DE, FR, GB, IT, NL**

**1.** Polyacrylsäureester mit langkettigen Kohlenwasserstoff- und Polyoxyalkylengruppen, erhältlich durch Umesterung von durch radikalische Polymerisation erhaltenen Polyacrylsäurealkylestern, deren Alkylgruppen 1 bis 4 Kohlenstoffatome aufweisen, mit einem Gemisch von

a) Alkoholen, ausgewählt aus der Gruppe bestehend aus

a1 gesättigten aliphatischen Alkoholen mit 4 bis 22 Kohlenstoffatomen,

a2 ungesättigten aliphatischen Alkoholen mit 8 bis 22 Kohlenstoffatomen,

a3 Alkylphenolen, deren Alkylgruppen jeweils 8 bis 20 Kohlenstoffatome aufweisen oder deren Oxalkierungsprodukte mit 1 bis 3 Oxyethylen- und/oder Oxypropyleneinheiten,

und

b) Polyoxyalkylenmonoolen der allgemeinen, durchschnittlichen Formel

$$R^1O\text{-}(C_nH_{2n}O\text{-})_xH$$

wobei

$R^1$ der Kohlenwasserstoffrest eines Startalkohols $R^1OH$ ist,

n 2, 3 oder 4 ist und in der durchschnittlichen Polyoxyalkylengruppe einen mittleren Wert

von 2 bis 3 hat,

x in der durchschnittlichen Polyoxyalkylengruppe einen mittleren Wert von 4 bis 50 hat,

wobei das molare Verhältnis von a : b gleich 1 : 11 bis 28 : 1 beträgt,

in solchen Mengen, daß bis zu 70 % der Estergruppen umgesetzt werden, in Gegenwart eines an sich bekannten Umesterungskatalysators bei Temperaturen von 70 bis 160 °C, gegebenenfalls in Gegenwart eines Lösungsmittels.

**2.** Polyacrylsäureester nach Anspruch 1, bei dessen Herstellung als Komponente a1 ein gesättigter Fettalkohol mit 12 bis 18 Kohlenstoffatomen verwendet worden ist.

**3.** Polyacrylsäureester nach Anspruch 2, bei dessen Herstellung als Komponente a1 Stearylalkohol oder Talgfettalkohol verwendet worden ist.

**4.** Polyacrylsäureester nach Anspruch 1, bei dessen Herstellung als Komponente a2 Oleylalkohol verwendet worden ist.

**5.** Polyacrylsäureester nach einem oder mehreren der vorhergehenden Ansprüche, dadurch gekennzeichnet, daß man als Komponente b) Polyoxyalkylenmonoole verwendet, deren Rest $R^1$ ein Methylrest ist.

**6.** Polyacrylsäureester nach einem oder mehreren der vorhergehenden Ansprüche, dadurch gekennzeichnet, daß man als Komponente b) Polyoxyalkylenmonoole verwendet, deren Index n 2 oder 3 ist und im durchschnittlichen Molekül einen Wert von 2,1 bis 2,3 hat.

**7.** Polyacrylsäureester nach einem oder mehreren der vorhergehenden Ansprüche, dadurch gekennzeichnet, daß man als Komponente b) Polyoxyalkylenmonoole verwendet, deren Index x im durchschnittlichen Molekül 6 bis 20 ist.

**8.** Polyacrylsäureester nach einem oder mehreren der vorhergehenden Ansprüche, dadurch gekennzeichnet, daß bei der Umesterung das molare Verhältnis der Komponente a) : Komponente b) 1 : 10 bis 10 : 1 beträgt.

**9.** Polyacrylsäureester nach einem oder mehreren der vorhergehenden Ansprüche, dadurch gekennzeichnet, daß bei der Umsetzung das molare Verhältnis der Komponente a) : Komponente b) 5 : 1 bis 9 : 1 beträgt.

**10.** Polyacrylsäureester nach Anspruch 1, erhältlich durch Umesterung von Polyacrylsäurealkylestern, bei denen bis zu 50 Mol-% der Acrylsäurealkylester durch die entsprechenden Methacrylsäurealkylester ersetzt sind.

**11.** Verwendung der Polyacrylsäureester entsprechend den vorhergehenden Ansprüchen als W/O-Emulgatoren für natürliche oder synthetische Öle.

**Patentansprüche für folgenden Vertragsstaat : ES**

**1.** Verfahren zur Herstellung von Polyacrylsäureestern mit langkettigen Kohlenwasserstoff- und Polyoxyalkylengruppen, dadurch gekennzeichnet, daß man durch radikalische Polymerisation erhaltene Polyacrylsäurealkylester, deren Alkylgruppen 1 bis 4 Kohlenstoffatome aufweisen, mit einem Gemisch von

a) Alkoholen, ausgewählt aus der Gruppe bestehend aus

a1 gesättigten aliphatischen Alkoholen mit 4 bis 22 Kohlenstoffatomen,

a2 ungesättigten aliphatischen Alkoholen mit 8 bis 22 Kohlenstoffatomen,

a3 Alkylphenolen, deren Alkylgruppen jeweils 8 bis 20 Kohlenstoffatome aufweisen,

und

b) Polyoxyalkylenmonoolen der allgemeinen, durchschnittlichen Formel

$R^1O\text{-}(C_nH_{2n}O\text{-})_xH$

wobei

$R^1$ der Kohlenwasserstoffrest eines Startalkohols $R^1OH$ ist,

n 2, 3 oder 4 ist und in der durchschnittlichen Polyoxyalkylengruppe einen mittleren Wert von 2 bis 3 hat,

x in der durchschnittlichen Polyoxyalkylengruppe einen mittleren Wert von 4 bis 50 hat,

wobei das molare Verhältnis von a : b gleich 1 : 11 bis 28 : 1 beträgt, in solchen Mengen umestert, daß bis zu 70 % der Estergruppen umgesetzt werden, und die Umesterung in Gegenwart eines an sich bekannten Umesterungskatalysators bei Temperaturen von 70 bis 160 °C, gegebenenfalls in Gegenwart eines Lösungsmittel durchführt.

**2.** Verfahren nach Anspruch 1, dadurch gekennzeichnet, daß man als Komponente a1 einen gesättigten Fettalkohol mit 12 bis 18 Kohlenstoffatomen verwendet.

**3.** Verfahren nach Anspruch 2, dadurch gekennzeichnet, daß man als Komponente a1 Stearylalkohol oder Talgfettalkohol verwendet.

**4.** Verfahren nach Anspruch 1, dadurch gekennzeichnet, daß man als Komponente a2 Oleylalkohol verwendet.

**5.** Verfahren nach einem oder mehreren der vorhergehenden Ansprüche, dadurch gekennzeichnet, daß man als Komponente b) Polyoxyalkylenmonoole verwendet, deren Rest $R^1$ ein Methylrest ist.

**6.** Verfahren nach einem oder mehreren der vorhergehenden Ansprüche, dadurch gekennzeichnet, daß man als Komponente b) Polyoxyalkylenmonoole verwendet, deren Index n = 2 oder 3 ist und im durchschnittlichen Molekül einen Wert von 2,1 bis 2,3 hat.

**7.** Verfahren nach einem oder mehreren der vorhergehenden Ansprüche, dadurch gekennzeichnet, daß man als Komponente b) Polyoxyalkylenmonoole verwendet, deren Index x im durchschnittlichen Molekül 6 bis 20 ist.

**8.** Verfahren nach einem oder mehreren der vorhergehenden Ansprüche, dadurch gekennzeichnet, daß man bei der Umesterung ein molares Verhältnis der Komponente a) : Komponente b) von 1 : 10 bis 10 : 1 einhält.

**9.** Verfahren nach einem oder mehreren der vorhergehenden Ansprüche, dadurch gekennzeichnet, daß man bei der Umesterung ein molares Verhältnis der Komponente a) : Komponente b) von 5 : 1 bis 9 : 1 einhält.

**10.** Verfahren nach einem oder mehreren der vorhergehenden Ansprüche, dadurch gekennzeichnet, daß man einen Polyacrylsäurealkylester umestert, bei dem bis zu 50 Mol-% der Acrylsäurealkylester durch die entsprechenden Methacrylsäurealkylester ersetzt sind.

**11.** Verwendung der Polyacrylsäureester, hergestellt nach einem oder mehreren der vorhergehenden Ansprüche, als W/O-Emulgatoren für natürliche oder synthetische Öle.

## Claims

## Claims for the following Contracting States : BE, DE, FR, GB, IT, NL

**1.** Polyacrylic ester containing long-chain hydrocarbon and polyoxyalkylene groups, obtainable by transesterification of polyalkyl acrylates whose alkyl groups have 1 to 4 carbon atoms and which were obtained by free-radical polymerization, with a mixture of

a) alcohols, selected from the group consisting of

a1 saturated aliphatic alcohols having 4 to 22 carbon atoms,

a2 unsaturated aliphatic alcohols having 8 to 22 carbon atoms,

a3 alkylphenols whose alkyl groups each have 8 to 20 carbon atoms, or the oxyalkylation products thereof containing 1 to 3 oxyethylene and/or oxypropylene units,

and

b) polyoxyalkylene monools of the general, average formula

$$R^1O\text{-}(C_nH_{2n}O\text{-})_xH$$

where

$R^1$ is the hydrocarbon radical of a starting alcohol $R^1OH$,

n is 2, 3 or 4 and in the average polyoxyalkylene group has an average value of from 2 to 3,

x in the average polyoxyalkylene group has an average value of from 4 to 50,

where the a:b molar ratio is from 1:11 to 28:1,

in such amounts that up to 70% of the ester groups are converted, in the presence of a transesterification catalyst known per se, at temperatures of from 70 to 160 °C, optionally in the presence of a solvent.

**2.** Polyacrylic ester according to Claim 1, prepared using, as component a1, a saturated fatty alcohol having 12 to 18 carbon atoms.

**3.** Polyacrylic ester according to Claim 2, prepared using, as component a1, stearyl alcohol or tallow fatty alcohol.

**4.** Polyacrylic ester according to Claim 1, prepared using, as component a2, oleyl alcohol.

**5.** Polyacrylic ester according to one or more of the preceding claims, characterized in that, as component b), polyoxyalkylene monools are used whose radical $R^1$ is a methyl radical.

**6.** Polyacrylic ester according to one or more of the preceding claims, characterized in that, as component b), polyoxyalkylene monools are used whose index n is 2 or 3 and in the average molecule has a value of from 2.1 to 2.3.

**7.** Polyacrylic ester according to one or more of the preceding claims, characterized in that, as component b), polyoxyalkylene monools are used whose index x in the average molecule is from 6 to 20.

**8.** Polyacrylic ester according to one or more of the preceding claims, characterized in that the component a):component b) molar ratio during the transesterification is from 1:10 to 10:1.

**9.** Polyacrylic ester according to one or more of the preceding claims, characterized in that the component a):component b) molar ratio during the reaction is from 5:1 to 9:1.

**10.** Polyacrylic ester according to Claim 1, obtainable by transesterification of polyalkyl acrylates in which up to 50 mol% of the alkyl acrylates have been replaced by the corresponding alkyl methacrylates.

**11.** Use of the polyacrylic esters corresponding to the preceding claims as W/O emulsifiers for natural or synthetic oils.

**Claims for the following Contracting State : ES**

**1.** Process for the preparation of polyacrylic esters containing long-chain hydrocarbon and polyoxyalkylene groups, characterized in that polyalkyl acrylates whose alkyl groups have 1 to 4 carbon atoms and which were obtained by free-radical polymerization, are transesterified with a mixture of

a) alcohols, selected from the group consisting of

a1 saturated aliphatic alcohols having 4 to 22 carbon atoms,

a2 unsaturated aliphatic alcohols having 8 to 22 carbon atoms,

a3 alkylphenols whose alkyl groups each have 8 to 20 carbon atoms,

and

b) polyoxyalkylene monools of the general, average formula

$$R^1O\text{-}(C_nH_{2n}O\text{-})_xH$$

where

$R^1$ is the hydrocarbon radical of a starting alcohol $R^1OH$,

n is 2, 3 or 4 and in the average polyoxyalkylene group has an average value of from 2 to 3,

x in the average polyoxyalkylene group has an average value of from 4 to 50,

where the a:b molar ratio is from 1:11 to 28:1,
in such amounts that up to 70% of the ester groups are converted, and the transesterification is carried out in the presence of a transesterification catalyst known per se, at temperatures of from 70 to 160 °C, optionally in the presence of a solvent.

**2.** Process according to Claim 1, characterized in that, as component a1, a saturated fatty alcohol having 12 to 18 carbon atoms is used.

**3.** Process according to Claim 2, characterized in that, as component a1, stearyl alcohol or tallow fatty alcohol is used.

**4.** Process according to Claim 1, characterized in that, as component a2, oleyl alcohol is used.

**5.** Process according to one or more of the preceding claims, characterized in that, as component b), polyoxyalkylene monools are used whose radical $R^1$ is a methyl radical.

**6.** Process according to one or more of the preceding claims, characterized in that, as component b), polyoxyalkylene monools are used whose index n is 2 or 3 and in the average molecule has a value of from 2.1 to 2.3.

**7.** Process according to one or more of the preceding claims, characterized in that, as component b), polyoxyalkylene monools are used whose index x in the average molecule is from 6 to 20.

**8.** Process according to one or more of the preceding claims, characterized in that the component a)-:component b) molar ratio during the transesterification is from 1:10 to 10:1.

**9.** Process according to one or more of the preceding claims, characterized in that the component a)-:component b) molar ratio during the transesterification is from 5:1 to 9:1.

**10.** Process according to one or more of the preceding claims, characterized in that a polyalkyl acrylate in which up to 50 mol% of the alkyl acrylates have been replaced by the corresponding alkyl methacrylates is transesterified.

**11.** Use of the polyacrylic esters prepared according to one or more of the preceding claims as W/O emulsifiers for natural or synthetic oils.

**Revendications**
**Revendications pour les Etats contractants suivants : BE, DE, FR, GB, IT, NL**

**1.** Polymère d'un ester d'un acide acrylique comportant des groupes hydrocarbonés à longue chaîne et polyoxyalkylène, pouvant être préparé par transestérification de poly(acrylates d'alkyle) obtenus par polymérisation radicalaire et dont les groupes alkyle ont de 1 à 4 atomes de carbone, avec un mélange
a) d'alcools, choisis parmi l'ensemble comprenant
a1) les alcools aliphatiques saturés ayant de 4 à 22 atomes de carbone,
a2) les alcools aliphatiques insaturés ayant de 8 à 22 atomes de carbone,
a3) les alkylphénols dont les groupes alkyle ont chacun de 8 à 20 atomes de carbone ou encore leurs produits d'alcoxylation avec 1 à 3 motifs oxyde d'éthylène et/ou oxyde de propylène,
et
b) de monools polyoxyalkylénés de formule générale moyenne

$$R^1O\text{-}(C_nH_{2n}O\text{-})_xH$$

dans laquelle
$R^1$ est le résidu hydrocarboné d'un alcool de départ $R^1OH$,
n vaut 2, 3 ou 4 et, dans le groupe polyoxyalkylène moyen a en moyenne une valeur de 2 à 3,
x, dans le groupe polyoxyalkylène moyen, a une valeur moyenne de 4 à 50,
le rapport en moles a:b étant de 1:11 à 28:1,
en des quantités telles que l'on fait réagir jusqu'à 70 % des groupes ester, en présence d'un

catalyseur de transestérification connu en soi, à des températures de 70 à 160°C et éventuellement en présence d'un solvant.

**2.** Polymère d'un ester d'un acide acrylique selon la revendication 1, lors de la préparation duquel on utilise comme composant a1 un alcool gras saturé ayant de 12 à 18 atomes de carbone.

**3.** Polymère d'un ester d'un acide acrylique selon la revendication 2, lors de la préparation duquel on utilise comme composant ai de l'alcool stéarylique ou l'alcool gras dérivé du suif.

**4.** Polymère d'un ester d'un acide acrylique selon la revendication 1, lors de la préparation duquel on utilise comme composant a2 de l'alcool oléylique.

**5.** Polymère d'un ester d'un acide acrylique selon l'une ou plusieurs des revendications précédentes, caractérisé en ce qu'on utilise comme composant b) des monools polyoxyalkylénés dont le résidu $R^1$ est un radical méthyle.

**6.** Polymère d'un ester d'un acide acrylique selon l'une ou plusieurs des revendications précédentes, caractérisé en ce qu'on utilise comme composant b) des monools polyoxyalkylénés dont l'indice n vaut 2 ou 3 et, dans la molécule moyenne, a une valeur de 2,1 à 2,3.

**7.** Polymère d'un ester d'un acide acrylique selon l'une ou plusieurs des revendications précédentes, caractérisé en ce qu'on utilise comme composant b) des monools polyoxyalkylénés dont l'indice x vaut de 6 à 20 dans la molécule moyenne.

**8.** Polymère d'un ester d'un acide acrylique selon l'une ou plusieurs des revendications précédentes, caractérisé en ce que, lors de la transestérification, le rapport en moles du composant a) au composant b) est de 1:10 à 10:1.

**9.** Polymère d'un ester d'un acide acrylique selon l'une ou plusieurs des revendications précédentes, caractérisé en ce que, lors de la réaction, le rapport en moles du composant a) au composant b) est de 5:1 à 9:1.

**10.** Polymère d'un ester d'un acide acrylique selon la revendication 1, que l'on peut obtenir par transestérification de poly(acrylates d'alkyle), pour lesquels jusqu'à 50 % en moles des acrylates d'alkyle sont remplacés par les méthacrylates d'alkyle correspondants.

**11.** Utilisation des polymères d'un ester d'un acide acrylique selon les revendications précédentes comme émulsions eau dans l'huile pour huiles naturelles et synthétiques.

**Revendications pour l'Etat contractant suivant : ES**

**1.** Procédé pour préparer des polymères d'un ester d'un acide acrylique comportant des groupes hydrocarbonés à longue chaîne et des groupes polyoxyalkylène, caractérisé en ce qu'on transestérifie des poly(acrylates d'alkyle) obtenus par polymérisation radicalaire et dont les groupes alkyle ont de 1 à 4 atomes de carbone, avec un mélange

a) d'alcools, choisis parmi l'ensemble comprenant

a1) les alcools aliphatiques saturés ayant de 4 à 22 atomes de carbone,

a2) les alcools aliphatiques insaturés ayant de 8 à 22 atomes de carbone,

a3) les alkylphénols dont les groupes alkyle ont chacun de 8 à 20 atomes de carbone ou encore leurs produits d'alcoxylation avec 1 à 3 motifs oxyde d'éthylène et/ou oxyde de propylène,

et

b) de monools polyoxyalkylénés de formule générale moyenne

$R^1O\text{-}(C_nH_{2n}O\text{-})_xH$

dans laquelle

$R^1$ est le résidu hydrocarboné d'un alcool de départ $R^1OH$,

n vaut 2, 3 ou 4 et, dans le groupe polyoxyalkylène moyen a en moyenne une valeur de 2 à 3,

x, dans le groupe polyoxyalkylène moyen, a une valeur moyenne de 4 à 50,
le rapport en moles a:b étant de 1:11 à 28:1,
en des quantités telles que l'on fait réagir jusqu'à 70 % des groupes esters, et on met en oeuvre la transestérification en présence d'un catalyseur de transestérification connu en soi, à des températures de 70 à 160 °C et éventuellement en présence d'un solvant.

**2.** Procédé selon la revendication 1, lors de la préparation duquel on utilise comme composant a1 un alcool gras saturé ayant de 12 à 18 atomes de carbone.

**3.** Procédé selon la revendication 2, lors de la préparation duquel on utilise comme composant a1 de l'alcool stéarylique ou l'alcool gras dérivé du suif.

**4.** Procédé selon la revendication 1, lors de la préparation duquel on utilise comme composant a2 de l'alcool oléylique.

**5.** Procédé selon l'une ou plusieurs des revendications précédentes, caractérisé en ce qu'on utilise comme composant b) des monools polyoxyalkylénés dont le résidu $R^1$ est un radical méthyle.

**6.** Procédé selon l'une ou plusieurs des revendications précédentes, caractérisé en ce qu'on utilise comme composant b) des monools polyoxyalkylénés dont l'indice n vaut 2 ou 3 et, dans la molécule moyenne, a une valeur de 2,1 à 2,3.

**7.** Procédé selon l'une ou plusieurs des revendications précédentes, caractérisé en ce qu'on utilise comme composant b) des monools polyoxyalkylénés dont l'indice x vaut de 6 à 20 dans la molécule moyenne.

**8.** Procédé selon l'une ou plusieurs des revendications précédentes, caractérisé en ce que, lors de la transestérification, le rapport en moles du composant a) au composant b) est de 1:10 à 10:1.

**9.** Procédé selon l'une ou plusieurs des revendications précédentes, caractérisé en ce que, lors de la réaction, le rapport en moles du composant a) au composant b) est de 5:1 à 9:1.

**10.** Procédé selon l'une ou plusieurs des revendications précédentes, caractérisé en ce qu'on transestérifie un poly(acrylate d'alkyle) dans lequel jusqu'à 50 % en moles des acrylates d'alkyle sont remplacés par les méthacrylates d'alkyle correspondants.

**11.** Utilisation des polyacrylates préparés par un procédé selon l'une ou plusieurs des revendications précédentes, en tant qu'émulsifiant eau dans l'huile pour huiles naturelles ou synthétiques.